# EUROPÄISCHE PATENTSCHRIFT

(11) **EP 3 444 471 B1**
(45) Veröffentlichungstag und Bekanntmachung des Hinweises auf die Patenterteilung: **29.04.2020**
(21) Anmeldenummer: 17186768.2
(22) Anmeldetag: 18.08.2017
(51) Int. Cl.: F03D 80/00, F03D 80/80, F03D 80/50, E06C 7/16

(54) **WARTUNGSPLATTFORM, SOWIE ANORDNUNG ZUR WARTUNG VON EINBAUTEN IN EINEM TURM EINER WINDENERGIEANLAGE UND VERFAHREN ZUR MONTAGE EINER WARTUNGSPLATTFORM**
SERVICE PLATFORM, AND SYSTEM FOR MAINTENANCE OF INSERTS IN A TOWER OF A WIND TURBINE AND METHOD FOR THE ASSEMBLY OF A SERVICE PLATFORM
PLATE-FORME D'ENTRETIEN AINSI QUE DISPOSITIF D'ENTRETIEN DES ÉLÉMENTS DE MONTAGE DANS UNE TOUR D'UNE ÉOLIENNE ET PROCÉDÉ DE MONTAGE D'UNE PLATE-FORME D'ENTRETIEN

(43) Veröffentlichungstag der Anmeldung: 20.02.2019
(73) Patentinhaber: Nordex Energy GmbH, 22419 Hamburg (DE)
(72) Erfinder: Dahl, Sebastian, 18057 Rostock (DE); Schaale, Thomas, 18055 Rostock (DE); Kathöfer, Sebastian, 17168 Groß Wüstenfelde (DE)
(74) Vertreter: Garrels, Sabine

(56) Entgegenhaltungen:
- EP-A2- 2 505 834
- FR-A3- 2 526 838

## Beschreibung

Die Erfindung betrifft eine mobile Wartungsplattform sowie eine Anordnung für die Wartung und Reparatur von Einbauten in veränderbarer Höhe in Türmen für Windenergieanlagen, insbesondere Kabel und Kabelbündelungseinrichtungen in Türmen für Windenergieanlagen. Die Erfindung betrifft auch ein Verfahren zur Montage einer Wartungsplattform.

Ein Turm einer Windenergieanlage kann als Stahlturm, bestehend aus einer Mehrzahl von Turmsektionen, als Betonturm oder als sogenannter Hybridturm, bestehend aus einer Betonsektion und wenigstens einer Stahlrohrturmsektion, ausgebildet sein. Auf der obersten Turmsektion ist eine schwenkbare Gondel gelagert, in welcher eine Rotorwelle gelagert ist, die mit einem Generator in Wirkverbindung steht. Außerhalb der Gondel ist die Rotorwelle mit einer Rotornabe verbunden, an der in der Regel drei Rotorblätter schwenkbar gelagert sind. Zur optimalen Nutzung der Windenergie ist es erforderlich, dass der Rotor und mit diesem die den Rotor und einen Generator tragende Gondel aktiv im Wind ausgerichtet werden kann. Dieses Ausrichten im Wind wird als Windnachführung oder Azimutverstellung bezeichnet. Hierzu sind die Gondel mittels eines Azimutlagers um eine vertikale Achse drehbar auf dem Turm gelagert und geeignete Antriebe zur Azimutverstellung vorgesehen.

Die von dem Generator in der Gondel erzeugte elektrische Leistung wird über Kabel aus der Gondel durch den Turm zum Boden geführt, wobei die Kabel einerseits drehfest an der Gondel, andererseits drehfest innen an der Turmwandung befestigt sind. Bei einem Drehen oder Schwenken der Gondel um die vertikale Turmachse tritt somit die Situation auf, dass ein Kabelende sich gemeinsam mit der Gondel dreht, während das andere Kabelende, das im Turm befestigt ist, sich nicht dreht. Hierdurch kommt es zu einer Torsion oder Verdrillung der Kabel.

Die an ihrem oberen Ende drehfest mit der Gondel verbundenen Kabel werden zunächst in der Mitte des Turms herabhängend geführt. Daran anschließend werden die Kabel aus der Mitte des Turms heraus zur Turmwandung geführt, wo sie mittels Kabelhalteeinrichtungen befestigt sind. In dieser Ebene hängen die Kabel in der Regel etwas unterhalb der Anbindung an die Turmwandung schlaufenförmig durch; dieser Abschnitt wird als Kabeldurchhang oder Loop bezeichnet. Der Kabeldurchhang ermöglicht es, dass die Gondel gegenüber dem Turm um bis zu beispielsweise 2,5 Umdrehungen nach links oder rechts verdreht werden kann, bevor eine Begrenzung der Drehbewegung wirksam wird bzw. ein Zurückdrehen in die Ausgangsposition erforderlich wird, um die Kabel wieder zu entdrillen. Durch das Verdrehen der Gondel und die daraus folgende Verdrillung der Kabel werden die Kabel im Kabeldurchhang angehoben und beim Zurückdrehen wieder abgesenkt. Um eine Beschädigung der Kabel aufgrund von Biegung und Torsion zu vermeiden, ist es wünschenswert, dass sich die auftretende Verdrillung möglichst gleichmäßig auf den herabhängenden Bereich verteilt und zugleich eine Verdrillung im Kabeldurchhang beherrschbar wird. Hierfür wurden im Stand der Technik bereits verschiedene Lösungen vorgeschlagen.

So ist aus DE 102011076941 A1 eine Windenergieanlage mit einer drehbar gelagerten Gondel bekannt, bei der Kabel aus der Gondel kommend mittig im Turm geführt werden. Führungseinrichtungen zur mindestens teilweisen Festlegung der Kabelbündel sind zwischen diesen und dem Turm angeordnet. Dort wird eine Kabelführungsvorrichtung vorgeschlagen, welche einen Schwenkarm umfasst, der um eine horizontale Schwenkachse drehbar an der Turminnenwand angeordnet ist. Der Schwenkarm trägt an seinem freien Ende eine Bündelungsvorrichtung, die über eine Aufhängung um eine Drehachse drehbar an dem Schwenkarm befestigt ist. Bei einer Torsion der Kabel schwenkt der Schwenkarm der Führungsvorrichtung aus seiner horizontalen Stellung nach oben oder nach unten, um die tordierten Kabel gebündelt und beabstandet von der Wand zu halten.

Aus der EP 2762723 A1 ist eine weitere Windenergieanlage mit einer drehbar gelagerten Gondel bekannt, bei der Kabel aus der Gondel kommend mittig im Turm geführt werden. Die Kabel hängen aus der Gondel kommend frei im Inneren des Turms und sind dort in einem unteren Abschnitt drehfest an die Turmwandung angeschlagen. Die frei hängenden Kabel sind durch eine Kabelbündelungseinrichtung geführt, die über mindestens zwei Spanneinrichtungen in der Turmmitte gehalten wird. Die Spanneinrichtungen lassen jeweils Verdrehungen der Kabelbündelungseinrichtung nur in einem vorbestimmten Winkelbereich zu. Der vorbestimmte Winkelbereich ist bevorzugt deutlich kleiner als ein Viertelkreis.

Trotz der vorstehend zitierten Maßnahmen für eine schonenden Behandlung der Kabel ist eine regelmäßige Inspektion und Wartung der Kabel, der Kabelbefestigungsmittel und der Kabelbündelungseinrichtung unumgänglich, um u.a. Materialermüdungen frühzeitig erkennen und begegnen zu können. In Einzelfällen kann auch eine Reparatur oder ein Austausch von Komponenten erforderlich sein.

Insbesondere in hohen Türmen von Windenergieanlagen sind in der Regel Befahranlagen für das Service- und Wartungspersonal vorgesehenen, damit dieses in die Gondel gelangen kann. Zudem können partiell stationäre oder bewegbare Arbeitsbühnen fest eingebaut in den Türmen vorgesehen sein. Darüber hinaus umfassen die Türme stets eine Steigleiter, welche innen an der Turmwandung gehaltert ist.

In der DE 102005012497 A1 wird eine Arbeitsbühne zur Verwendung im Inneren eines turmartigen Bauwerks beschrieben, die auch dann verwendet werden kann, wenn der Turm durch einen Aufbau verschlossen ist. Die Arbeitsbühne weist eine scherengitterartige Tragstruktur und eine auf der Tragstruktur angeordnete Arbeitsplattform auf. Diese Arbeitsbühne kann sich durch die scherengitterartige Tragstruktur an unterschiedliche Innendurchmesser der turmartigen Bauwerke anpassen.

Die DE 102013208760 A1 schlägt eine Windenergieanlage mit einem Turm vor, welcher eine Mehrzahl von Turmsegmenten aufweist. Die Windenergieanlage weist ferner ein sich zumindest teilweise entlang der Länge des Turms erstreckendes Führungsseil sowie eine Arbeitsbühne auf, welche an dem Führungsseil befestigbar ist und über ein Fahrseil nach oben und unten bewegt werden kann.

EP 2505834 A2 offenbart eine Wartungsplattform, welche an einer Leiter in einem Windturbinenturm befestigt werden kann. Die Plattform umfasst eine horizontale Fläche mit seitlicher Sockelleiste. Anker können durch Stifte an jeder Sprosse der Leiter befestigt werden. Ebenso werden Abspannseile direkt an der Leiter angeschlagen.

Die im Stand der Technik aufgefundenen Arbeitsbühnen für Wartungs- und Servicepersonal sind relativ aufwendig ausgeführt und können örtlich nur sehr begrenzt genutzt werden. Beispielweise ist eine Inspektion und/oder Wartung von mittig im Turm hängenden Kabeln und Kabeldurchhang (Kabelloop) nur mit Hilfe eines Seilteams möglich.

In FR 2526838 A3 wird eine Gerüststruktur offenbart, welche eine Plattform umfasst, die mindestens zwei vertikale Leitern miteinander verbindet. Eine Stabilisierungseinrichtung weist eine Hülse auf, die mit einer Klammer an einem der Leiterholme befestigt ist. Die Hülse bildet eine Schwenkachse parallel zum Leiterholm, in der ein Stabilisierungsschenkel schwenken kann.

### Darstellung der Erfindung

Es ist Aufgabe der vorliegenden Erfindung, eine mobile Arbeitsbühne vorzusehen, welche im Inneren eines turmartigen Bauwerkes temporär verwendet werden kann, die jedoch die Nachteile der im Stand der Technik bekannten Arbeitsbühnen oder Montageplattformen beseitigt. Ein Aspekt der Aufgabe der Erfindung ist es, die Wartung und den Service für das eingesetzte Personal sicherer zu gestalten. Zudem sollen die Kosten für Wartung und Service von Türmen für Windenergieanlagen reduziert werden.

Die Aufgabe wird gelöst durch eine Wartungsplattform zur vorzugsweise temporären Verwendung im Inneren eines Turms, insbesondere eines Stahlturms einer Windenergieanlage, umfassend mindestens ein Geländer und wenigsten ein Trittblech sowie eine Luke, wobei das wenigstens eine Trittblech an zwei seitlich angeordneten Trägern lösbar gehaltert ist. Die Luke ist bevorzugt mit dem Trittblech durch ein Scharnier verbunden. Die Träger sind wiederum jeweils an einer senkrechten Wange beweglich und lösbar gehaltert, wobei die Wangen abschnittsweise oder über die gesamte Länge als U-Profil ausgebildet sind und die offenen Seiten der U-Profile einander zugewandt sind. Die Wangen sind durch wenigstens zwei Justierstangen parallel zueinander ausrichtbar und/oder verbindbar, wobei jede der zwei Justierstangen in einem stationären Betriebszustand durch die Sprossen der Steigleiter geführt und gesichert ist.

In einer bevorzugten Weiterbildung weisen die Träger jeweils wenigstens eine Aufnahme für ein Anschlagmittel eines Drahtseils auf, wobei das Anschlagmittel als Tragschlaufe, Kausche oder besonders bevorzugt als Sicherheitskarabinerhaken ausgebildet ist.

Weiterhin bevorzugt weisen die seitlichen Träger jeweils mindestens eine Rohrbuchse zum Aufnehmen eines Standrohres des Geländers auf, wobei die oder jede Rohrbuchse wenigstens eine Bohrung für ein Sicherungsmittel zum Sichern des Geländers aufweist. Als Sicherungsmittel sind bevorzugt Steckbolzen vorgesehen, die mittels eines Drahtseils oder einer Kette unverlierbar an den Trägern angebunden sind.

In einer bevorzugten Weiterbildung weisen die Wangen wenigstens eine Aufnahme für ein Anschlagmittel eines Drahtseils auf, wobei das Anschlagmittel als Tragschlaufe, Kausche oder bevorzugt als Sicherheitskarabinerhaken ausgebildet ist. Weiterhin können die Anschlagmittel auch Schäkel umfassen.

In einer vorteilhaften Weiterbildung weisen die Wangen jeweils eine erste Bohrung zum Aufnehmen und/oder Durchführen einer Justierstange und eine zweite Bohrung zum Aufnehmen und/oder Durchführen einer zweiten Justierstange auf. Zudem weist zumindest eine Wange Aufnahmen, Halter oder Bohrungen für die Justierstange(n) auf, wenn diese temporär nicht zum Festsetzen der Wartungsplattform an einer Steigleiter oder einem Traggerüst benötigt werden.

In einer besonders bevorzugten Weiterbildung weisen die Wangen innenseitig, d.h., im offenen U-Profil, jeweils wenigstens ein Gleitstück auf. Das Gleitstück kann einstückig über die gesamte Länge oder eine Teillänge der Wange ausgebildet sein. Es können auch zwei oder mehr Gleitstücke, welche nur im Bereich der Wangenendabschnitte positioniert sind, vorgesehen sein. Vorzugsweise sind die Gleitstück aus Kunststoff gefertigt und/oder auswechselbar ausgeführt. Die Gleitstücke lassen sich zudem in der Kontur leicht an andere Holmgeometrien anpassen.

Vorteilhafterweise sind die Träger mit dem verbundenen und dazwischen angeordneten Trittblech derart ausrichtbar, dass das Trittblech stets waagerecht ausgerichtet ist, auch wenn die Steigleiter einige Grad aus der Senkrechten an der Turmwand montiert ist. Die Träger und die jeweils zugeordneten Wangen schließen dazu im montierten Zustand einen Winkel im Bereich von vorzugsweise 87° bis 93° ein, der Winkel kann jedoch auch in einem Bereich von 80° bis 100° liegen. Besonders bevorzugt ist der Winkel zwischen jedem Träger und der jeweils zugeordneten Wange in dem vorgenannten Bereich einstellbar. Hiermit ist es auf einfache Weise möglich, die Wartungsplattform auch an Steigleiterabschnitten einzusetzen, die gegenüber einer Senkrechten geneigt sind.

Die Aufgabe wird auch gelöst durch eine Anordnung, umfassend eine Steigleiter eines Turmes einer Windenergieanlage und eine mobile Wartungsplattform mit seitlichen Wangen, wobei in einem ersten Zustand die Steigleiter zwischen den Wangen positioniert und die Wartungsplattform mittels mindestens zwei Justierstangen an der Steigleiter lösbar gehaltert ist und die Justierstangen jeweils durch eine Sprosse der Steigleiter geführt sind und wobei in einem zweiten Zustand die Wangen vertikal verschiebbar an der Steigleiter gelagert sind, wobei die Wangen durch die Justierstangen miteinander verbunden sind und die Justierstangen außerhalb der Sprossen der Steigleiter geführt sind.

In einer bevorzugten Weiterbildung umfasst die Anordnung ein Hubmittel, welches ausgebildet und eingerichtet ist, die Wartungsplattform in dem zweiten Zustand zu heben und/oder zu senken, wobei die Wangen die Holme der Steigleiter umgreifen.

Die Aufgabe wird auch gelöst durch ein Verfahren, mit Verfahrensschritten zur Montage einer Wartungsplattform zur temporären Verwendung im Inneren eines Turms, insbesondere eines Turms einer Windenergieanlage, gemäß Anspruch 12. Die montierte Wartungsplattform wird entsprechend der Verfahrensschritte zum Verschieben und/oder Umsetzen gemäß Anspruch 13 von einer ersten vorbestimmten Höhe in eine zweite vorbestimmte Höhe verbracht. Die Demontage der Wartungsplattform erfolgt entsprechend der Verfahrensschritte gemäß Anspruch 14.

Für den Transport der noch nicht montierten Komponenten der Wartungsplattform innerhalb des Turmes wird vorteilhafterweise eine meist ohnehin vorhandene Turmbefahranlage genutzt, womit die Komponenten auf eine Plattform unterhalb der vorbestimmten Höhe verbracht werden. Für den Fall, dass keine Turmbefahranlage zur Verfügung stehen sollte, können die Komponenten auch mittels eines geeigneten Hubmittels auf eine Plattform unterhalb der vorbestimmten Höhe verbracht werden.

Die erfindungsgemäße Ausgestaltung der Wartungsplattform schafft die Möglichkeit, zu jeder Zeit die Wartungsplattform entlang einer Steigleiter über die gesamte Höhe des Turmes, d.h., vom Boden oder genauer gesagt von einer unteren stationären Zugangs- und/oder Einbautenplattform bis direkt unterhalb der Gondel zu positionieren. Insbesondere sind Seilteams für die Wartung von Kabelverbindungen oder Kabelbündelungseinrichtungen nicht erforderlich, somit wird die Sicherheit und Zugänglichkeit für das Personal erheblich verbessert. Letztlich senkt der Verzicht auf Zwischenplattformen innerhalb des Turms die Kosten für Einbauten.

### Ausführung der Erfindung

Die Erfindung wird anhand eines Ausführungsbeispiels erläutert. Hierzu zeigen
- Fig. 1: eine perspektivische Ansicht einer Windenergieanlage,
- Fig. 2: eine Innenansicht einer Turmsektion mit einem mittig geführten Kabelbündel,
- Fig. 3: eine Wartungsplattform gemäß der Erfindung,
- Fig. 4a: eine perspektivische Ansicht eines Steigleiterabschnitts und zweier U-Profile der Wartungsplattform im nicht montierten Zustand,
- Fig. 4b: eine perspektivische Ansicht eines Steigleiterabschnitts und zweier U-Profile der Wartungsplattform in einem ersten Montagezustand,
- Fig. 4c: eine perspektivische Ansicht eines Steigleiterabschnitts und Träger der Wartungsplattform in einem zweiten Montagezustand,
- Fig. 4d: eine perspektivische Ansicht eines Steigleiterabschnitts und der teilmontierten Wartungsplattform in einem dritten Montagezustand,
- Fig. 4e: eine perspektivische Ansicht eines Steigleiterabschnitts und der fertig montierten Wartungsplattform,
- Fig. 4f: eine perspektivische Ansicht eines Steigleiterabschnitts und der fertig montierten Wartungsplattform mit Bewegungsrichtungspfeilen,
- Fig. 5: eine Detailansicht eines Trägers und eines Steigleiterabschnitts aus Fig. 4c,
- Fig. 6: eine Detailansicht von oberen Befestigungsmitteln der Wartungsplattform und eines Steigleiterabschnitts aus Fig. 4c bis 4f und
- Fig. 7: eine Seitenansicht eines Trägers aus Fig. 4d.

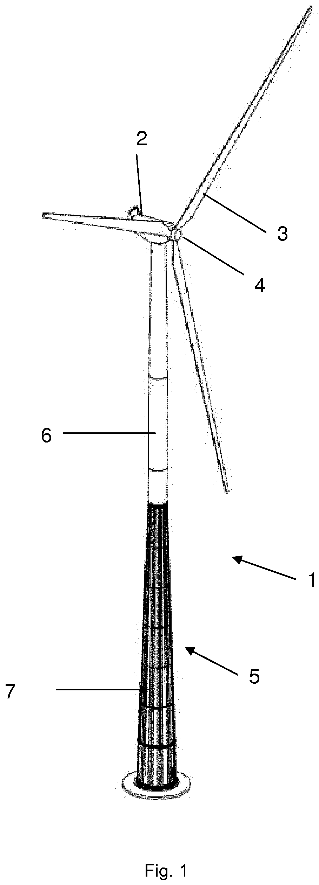

Die Fig. 1 zeigt eine perspektivische Ansicht einer Windenergieanlage. Der Stahlturm 1 ist im Ausführungsbeispiel in mehrere unterschiedliche Turmsektionen 5 und 6 unterteilt. In dem unteren, zum Boden gerichteten Abschnitt - mit größerem Durchmesser - bestehen die Turmsektionen 5 aus einzelnen Sektionssegmenten 7. Der obere Abschnitt - mit geringerem Durchmesser - weist Turmsektionen 6 in geschlossener Stahlrohrbauart auf. An Stelle des Stahlturms 1 kann auch ein Betonturm oder ein sogenannter Hybridturm, bestehend aus einer Betonsektion und wenigstens einer Stahlrohrsektion, vorgesehen sein. Auf der obersten Turmsektion 6 ist eine Gondel 2 schwenkbar gelagert, in welcher eine nicht dargestellte Rotorwelle gelagert ist, die mit einem ebenfalls nicht dargestellten Generator in Wirkverbindung steht. Außerhalb der Gondel 2 ist die Rotorwelle mit einer Rotornabe 4 verbunden, an der drei Rotorblätter 3 gelagert sind.

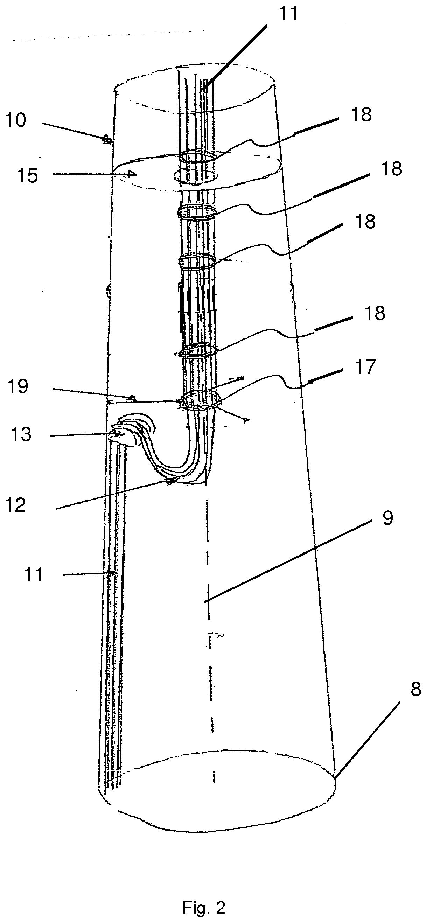

Fig. 2 zeigt eine Turmwandung 10 eines Stahlturms 1 für eine Windenergieanlage, und zwar im Bereich einer oberen Turmsektion 6 unmittelbar unterhalb der Gondel 2. Mehrere Kabel 12 werden aus der schwenkbar gelagerten Gondel 2 herunter mittig im Inneren des Stahlturms 1 parallel zu einer vertikalen Turmachse 9 geführt. In dem Stahlturm 1 befindet sich im Ausführungsbeispiel eine obere Turmplattform 15, die eine zentrale Öffnung aufweist, durch die die herabhängenden Kabel 11 hindurchgeführt sind. Die Kabel 11 werden über Kabelbündelungseinrichtungen 17, 18 zu einem Kabelbündel geordnet. Durch die Kabelbündelungseinrichtungen 17, 18 ist sichergestellt, dass die Kabel 11 einen ausreichenden Abstand untereinander besitzen und bei einer Torsion des Kabelbündels nicht beschädigt werden. Die am weitesten unten angeordnete Kabelbündelungseinrichtung 17 ist über drei Spanneinrichtungen 19 mit der Turmwandung 10 verspannt. Nach der Kabelbündelungseinrichtung 17 hängt das Kabelbündel frei in einem Kabeldurchhang 12 durch. Von dem Kabeldurchhang 12 kommend laufen die Kabel 11 über eine Kabelumlenkung 13 an die Turmwandung 10, wo sie mittels Kabelhalteeinrichtungen befestigt sind. Bei einem Schwenken bzw. Drehen der Gondel um die vertikale Turmachse 9 verdreht sich auch das Kabelbündel und wird zumindest bis zu der untersten Kabelbündelungseinrichtung 17 tordiert, welche durch die Spanneinrichtungen 19 hin zur Turmmitte abgespannt ist. Die über die Länge des hängenden Abschnitts der Kabel 12, welcher mehr als 10 Meter betragen kann, verteilten Kabelbündelungseinrichtungen 17, 18 bewirken, dass die auftretende Verdrillung sich über die gesamte Länge des hängenden Abschnitts verteilt. Dabei wird das Kabelbündel, abhängig von der Drehrichtung, angehoben oder abgesenkt. Nach der Kabelumlenkung 13 sind die Kabel 11 fixiert entlang der Turmwandung 10 zu einer unteren Turmplattform geführt. Parallel zur Kabelführung entlang der Turmwandung 10 ist von der oberen Turmplattform 15 bis zur unteren Turmplattform üblicherweise eine Steigleiter geführt und gehaltert, welche der Übersicht halber nicht dargestellt ist.

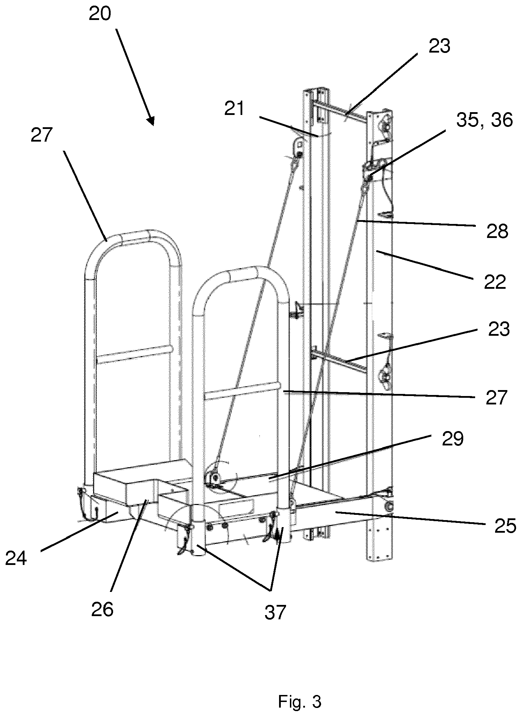

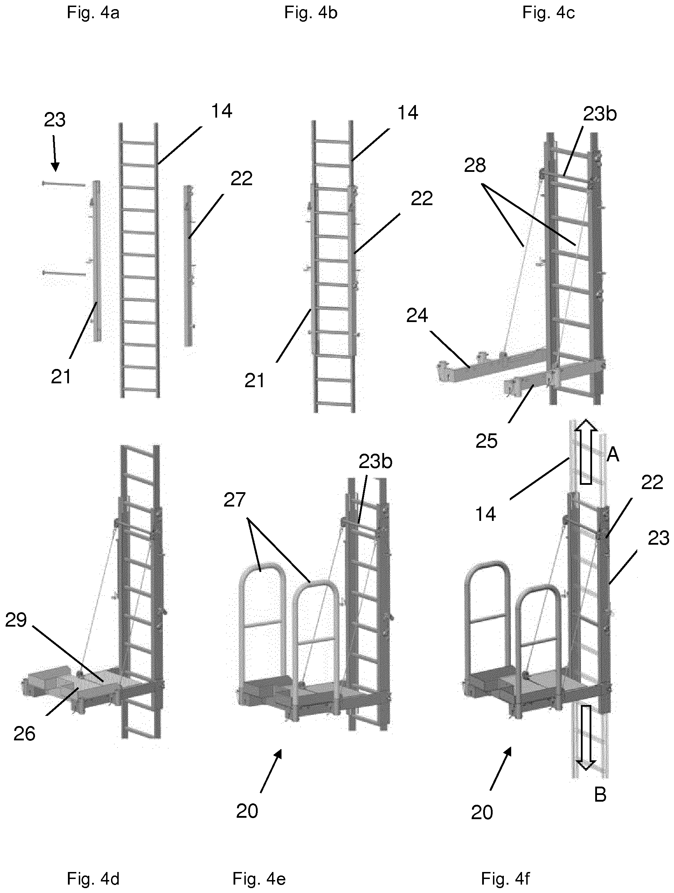

Die Fig. 3 zeigt eine komplett montierte Wartungsplattform 20 gemäß der Erfindung, vorgesehen zur Verbindung mit einer Steigleiter 14 in verschiedenen Höhen, wie in den Fig. 4a bis 4f gezeigt. Die Wartungsplattform 20 umfasst zwei senkrechte Wangen 21, 22, welche im Ausführungsbeispiel als U-Profile ausgebildet sind. Die senkrechten Wangen 21, 22 sind durch Justierstangen 23 miteinander verbunden. Die Wangen 21, 22 weisen im oberen Abschnitt jeweils eine Lasche 36 zum Anschlagen von Befestigungsmitteln und/oder Spannmitteln auf, im unteren Abschnitt ist jeweils eine Aufnahme für einen horizontal ausrichtbaren Träger 24, 25 vorgesehen, welcher wiederum eine Lasche 36 zum Anschlagen von Befestigungsmitteln und/oder Spannmitteln aufweist. Der linke Träger 24 ist an der linken Wange 21 oben mittels eines Stahlseils 28 und unten mittels eines Steckbolzens 30 gehaltert. Der rechte Träger 25 ist entsprechend an der rechten Wange 22 oben mittels eines Stahlseils 28 und unten mittels eines Steckbolzens 30 gehaltert. Zwischen den Trägern 24, 25 sind wenigstens ein Trittblech 26 und eine Luke 29 lösbar eingespannt. Weiterhin sind an den Trägern 24, 25 jeweils zwei Rohrbuchsen 37 zur Aufnahme eines Geländers 27 vorgesehen.

Die Figuren 4a bis 4f zeigen verschiedene Montagezustände der Wartungsplattform 20. Es sind zwei Möglichkeiten der Montage dargestellt. In einem ersten Zustand (zu sehen in Fig. 4a und 4b) ist die Steigleiter 14 zwischen den Wangen 21, 22 positioniert und die Wangen 21, 22 mittels der Justierstangen 23 lösbar an der Steigleiter 14 gehaltert. Dazu werden die Justierstangen 23 jeweils durch eine hohle Sprosse 42 der Steigleiter 14 geführt. In einem zweiten Zustand (zu sehen in Fig. 4c bis 4f) sind die Wangen 21, 22 vertikal verschiebbar an der Steigleiter 14 gelagert. Dazu sind die Wangen 21, 22 durch die Justierstangen 23b außerhalb der Sprossen 42 miteinander verbunden. In dem zweiten Zustand ist die Wartungsplattform 20 vertikal durch ein hier nicht gezeigtes Hubmittel verschiebbar. Die senkrechten Wangen 21, 22 umgreifen dabei mit ihren U-Profilen die seitlichen Holme 16 der Steigleiter 14.

Die Bereitstellung der Wangen 21, 22 und der Justierstangen 23 benachbart zur Steigleiter 14 wird in Fig. 4a und die Verbindung dieser Komponenten in einem ersten Montagezustand wird in Fig. 4b gezeigt. In den Fig. 4c bis 4f werden die weiteren Schritte bis hin zur vollständig montierten und an der Steigleiter 14 verschiebbar geführten Wartungsplattform 20 dargestellt. Die Fig. 4c zeigt eine perspektivische Ansicht eines Abschnitts der Steigleiter 14 mit montierten Wangen 21, 22 und der zwei Träger 24, 25 der Wartungsplattform, welche über die Drahtseile 28 miteinander verbunden sind, in einem zweiten Montagezustand. Mit Hilfe der Drahtseile 28 kann der Winkel zwischen den Wangen 21, 22 und den Trägern 24, 25 der Wartungsplattform 20 derart eingestellt werden, dass die Träger 24, 25 waagerecht sind, insbesondere in einem Bereich von 87° bis 93°. In Fig. 4d ist ein dritter Montagezustand der teilmontierten Wartungsplattform dargestellt, wobei dort bereits das Trittblech 26 und die Luke 29 montiert sind. In Fig. 4e ist in einem vierten Montagezustand die Wartungsplattform 20 durch Geländer 27 komplettiert. In Fig. 4f ist schließlich durch die Bewegungspfeile A und B angedeutet, wie die montierte Wartungsplattform 20 sich durch ein nicht dargestelltes Hubmittel an der Steigleiter 14 vertikal in eine gewünschte Position verschieben lässt.

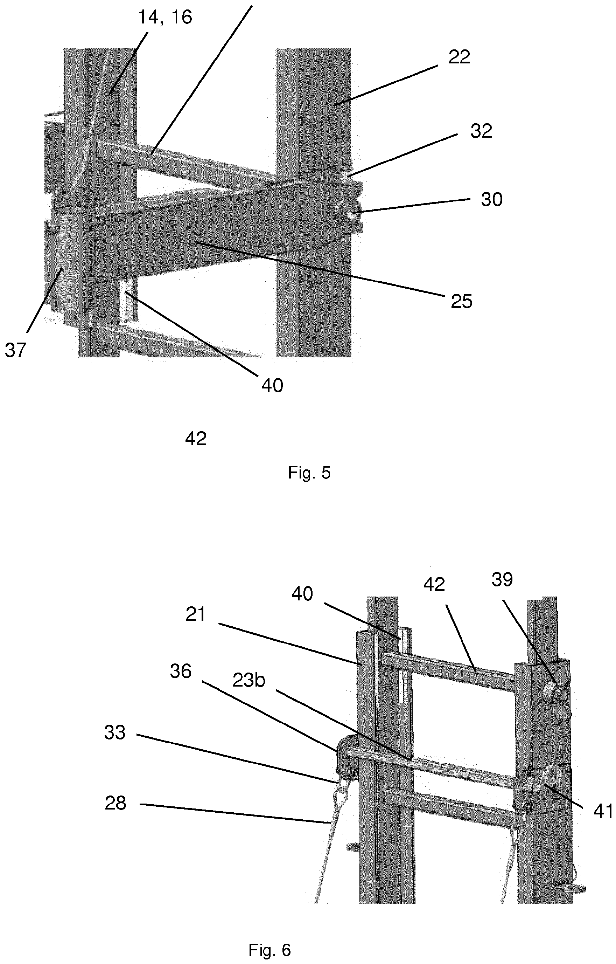

Fig. 5 zeigt eine Detailansicht des rechten Trägers 25 und einen Abschnitt der Steigleiter 14 mit Sprossen 42 und Holmen 16 aus Fig. 4c. Wie die Fig. 5 erkennen lässt, ist der rechte Träger 25 mittels eines Steckbolzens 30 an der rechten Wange 22 schwenkbar gelagert, wobei der Steckbolzen 30 durch einen Splintbolzen 32 gesichert ist. Wie die Fig. 5 weiter erkennen lässt, sind am unteren Ende der Wangen 21, 22 Gleitstücke 40 aus vorzugsweise Kunststoff vorgesehen, um eine Beschädigung der Holme 16 der Steigleiter 14, insbesondere beim Verschieben der Wartungsplattform 20, zu vermeiden.

Fig. 6 zeigt eine Detailansicht des oberen Abschnitts der Wangen 21, 22 und einen Abschnitt der Steigleiter 14 mit Sprossen 42 und Holmen 16. Wie die Fig. 6 erkennen lässt, weisen die Wange 21, 22 Laschen 36 mit Durchgangsbohrungen auf, wobei durch eine erste Bohrung jeder Lasche 36 ein Schäkel 33 geführt ist, an dem ein Sicherheitskarabinerhaken 31 des Drahtseils 28 angeschlagen ist. Durch eine zweite Bohrung ist das Ende einer Justierstange 23b geführt und durch einen Federstecker 41 gesichert. Durch eine Sprosse 42 der Steigleiter 14 ist eine weitere Justierstange 23 geführt, welche durch eine Flügelmutter 39 gesichert ist. Wie die Fig. 6 weiter erkennen lässt, sind an dem oberen Ende der Wangen 21, 22 ebenfalls Gleitstücke 40 vorgesehen, um eine Beschädigung der Holme 16 der Steigleiter 14, insbesondere beim Verschieben der Wartungsplattform 20, zu vermeiden.

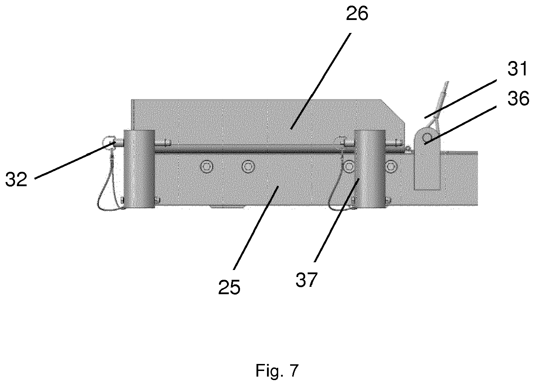

Fig. 7 zeigt eine Seitenansicht des auskragenden Abschnittes des rechten Trägers 25 der Wartungsplattform 20 mit angeschweißten Rohrbuchsen 37 und Lasche 36, welche eine Bohrung zur Aufnahme eines Bolzens aufweist, an dem ein Sicherheitskarabinerhaken 31 des Drahtseils 28 angeschlagen ist. Die Rohrbuchsen 37 weisen im Ausführungsbeispiel einen kreisförmigen Querschnitt zur Aufnahme eines kreisrunden Standrohres des Geländers 27 auf, wobei das Standrohr durch einen Splintbolzen 32 gesichert ist. Andere Querschnittsformen (oval, quadratisch etc.) der Rohrbuchsen 37 und des Geländers 27 sind ebenfalls möglich.

Die Wartungsplattform 20 wird zur temporären Verwendung im Inneren eines Turms, insbesondere eines Turms 1 einer Windenergieanlage montiert. Dazu müssen die einzelnen Komponenten der Wartungsplattform 20 innerhalb des Turms 1 in eine erste vorbestimmte Höhe transportiert werden. Die Wangen 21, 22 werden an den Holmen 16 der Steigleiter 14 positioniert und die obere Justierstange 23a wird durch die erste Wange 21 und durch eine Sprosse 42 der Steigleiter 14 und die zweite Wange 22 geschoben und gesichert. Ebenso wird mit der unteren Justierstange 23a verfahren. Danach werden der erste und der zweite Träger 24, 25 mit der ersten und der zweiten Wange 21, 22 lösbar verbunden. Das Trittblech 26 und die Luke 29 werden mit den Trägern 24, 25 lösbar verbunden und das Geländer 27 wird in die Rohrbuchsen 37 gesteckt und gesichert.

Zum vertikalen Verschieben und/oder Umsetzen der Wartungsplattform 20 an der Steigleiter 14 müssen die Justierstangen 23 aus den Sprossen 42 der Steigleiter 14 entfernt werden. Damit die Wartungsplattform 20 weiterhin stabil bleibt, muss wenigstens eine Justierstange 23b direkt mit der Wartungsplattform 20 verbunden werden. Dies erfolgt, indem die untere Justierstange 23a demontiert und an die oberen Laschen 36 der Wangen 21, 22 montiert und gesichert wird. Anschließend wird ein Hebemittel an der Justierstange 23b angeschlagen, auf Zug belastet und die Wartungsplattform 20 entlastet. Die obere Justierstange 23a wird demontiert und in einer Aufnahme an einer der beiden Wangen 21, 22 sicher gelagert. Die Wartungsplattform 20 wird an der Steigleiter 14 geführt in eine zweite vorbestimmte Höhe verbracht, die obere Justierstange 23a wird aus der Aufnahme entnommen und durch die erste Wange 21, durch eine Sprosse 42 der Steigleiter 14 und die zweite Wange 22 geschoben und gesichert. Danach kann das Hebemittel entkoppelt werden. Die Justierstange 23b wird aus den oberen Laschen 36 der Wangen 21, 22 gelöst und entnommen und wieder als untere Justierstange 23a durch die Wangen 21, 22 und durch eine Sprosse 42 der Steigleiter 14 geschoben und gesichert.

Soll die Wartungsplattform 20 demontiert werden, erfolgt dies in umgekehrter Reihenfolge zur Montage der Wartungsplattform 20.

### Bezugszeichen

- 1: Stahlturm
- 2: Gondel
- 3: Rotorblatt
- 4: Rotornabe
- 5: Turmsektion
- 6: Turmsektion
- 7: Sektionssegment
- 8: Ringflansch
- 9: Turmachse
- 10: Turmwandung
- 11: Kabel
- 12: Kabeldurchhang
- 13: Kabelumlenkung
- 14: Steigleiter
- 15: Turmplattform
- 16: Holm
- 17: Kabelbündelungseinrichtung
- 18: Kabelbündelungseinrichtung
- 19: Spanneinrichtung
- 20: Wartungsplattform
- 21: Wange
- 22: Wange
- 23: Justierstange
- 23a: Justierstange durch eine Sprosse 42 geführt
- 23b: Justierstange durch die oberen Laschen 36 der Wangen 21, 22 geführt
- 24: Träger
- 25: Träger
- 26: Trittblech
- 27: Geländer
- 28: Drahtseil
- 29: Luke
- 30: Steckbolzen
- 31: Sicherheitskarabinerhaken
- 32: Splintbolzen
- 33: Schäkel
- 34: Schraube
- 35: Aufnahme
- 36: Lasche
- 37: Rohrbuchse
- 39: Flügelmutter
- 40: Gleitstück
- 41: Federstecker
- 42: Sprosse

## Patentansprüche

1. Wartungsplattform (20) zur vorzugsweise temporären Verwendung im Inneren eines Turms, insbesondere eines Turms (1) einer Windenergieanlage, wobei die Wartungsplattform (20) mindestens ein Geländer (27) und wenigstens ein Trittblech (26) sowie eine Luke (29) umfasst, wobei das wenigstens eine Trittblech (26) an zwei Trägern (24, 25) lösbar gehaltert ist, **dadurch gekennzeichnet, dass**
die Träger (24, 25) jeweils an einer senkrechten Wange (21, 22) beweglich und lösbar gehaltert sind, wobei die Wangen (21, 22) zumindest abschnittsweise als U-Profil ausgebildet sind, wobei die offenen Seiten der U-Profile einander zugewandt sind, und dass
die Wangen (21, 22) durch wenigstens zwei Justierstangen (23) parallel zueinander ausrichtbar und/oder verbindbar sind.

2. Wartungsplattform (20) nach Anspruch 1, **dadurch gekennzeichnet,**
**dass** jeder Träger (24, 25) wenigstens eine Aufnahme für ein Anschlagmittel eines Drahtseils (28) aufweist, wobei das Anschlagmittel als Tragschlaufe, Kausche oder Sicherheitskarabinerhaken (31) ausgebildet ist.

3. Wartungsplattform (20) nach einem der Ansprüche 1 bis 2, **dadurch gekennzeichnet, dass**
jeder Träger (24, 25) mindestens eine Rohrbuchse (37) zum Aufnehmen eines Standrohres des Geländers (27) aufweist, wobei die oder jede Rohrbuchse (37) wenigstens eine Bohrung für ein Sicherungsmittel zum Sichern des Geländers (27) aufweist.

4. Wartungsplattform (20) nach einem der Ansprüche 1 bis 3, **dadurch gekennzeichnet, dass**
jede Wange (21, 22) wenigstens eine Aufnahme (35) für ein Anschlagmittel eines Drahtseils (28) aufweist, wobei das Anschlagmittel als Tragschlaufe (38), Kausche oder Sicherheitskarabinerhaken (31) ausgebildet ist.

5. Wartungsplattform (20) nach einem der Ansprüche 1 bis 4, **dadurch gekennzeichnet, dass**
jede Wange (21, 22) eine erste Bohrung zum Aufnehmen und/oder Durchführen einer oder der ersten Justierstange (23) und eine zweite Bohrung zum Aufnehmen und/oder Durchführen einer oder der zweiten Justierstange (23) aufweist.

6. Wartungsplattform (20) nach einem der Ansprüche 1 bis 5, **dadurch gekennzeichnet, dass**
jede Wange (21, 22) im U-Profil wenigstens ein Gleitstück aufweist.

7. Wartungsplattform (20) nach einem der Ansprüche 1 bis 6, **dadurch gekennzeichnet, dass**
jeder Träger (24, 25) und die jeweils zugeordnete Wange (21, 22) im montierten Zustand einen Winkel im Bereich von 87° bis 93° einschließen.

8. Wartungsplattform (20) nach Anspruch 7, **dadurch gekennzeichnet, dass** der Winkel zwischen jedem Träger (24, 25) und der jeweils zugeordneten Wange (21, 22) im Bereich von 87° bis 93° einstellbar ist.

9. Anordnung zur Wartung von Einbauten in einem Turm (1) einer Windenergieanlage umfassend eine Steigleiter (14) eines Turmes (1) einer Windenergieanlage und eine Wartungsplattform (20) nach einem der Ansprüche 1 bis 9, **dadurch gekennzeichnet, dass**
in einem ersten Zustand die Steigleiter (14) zwischen den Wangen (21, 22) positioniert und die Wangen (21,22) der Wartungsplattform (20) mittels der Justierstangen (23) an der Steigleiter (14) lösbar gehaltert sind, wobei die Justierstangen (23) jeweils durch eine hohle Sprosse (42) der Steigleiter (14) geführt sind, und in einem zweiten Zustand die Wangen (21, 22) vertikal verschiebbar an der Steigleiter (14) gelagert sind, wobei die Wangen (21, 22) durch die Justierstangen (23) außerhalb der Sprossen (42) miteinander verbunden sind.

10. Anordnung nach Anspruch 9, **dadurch gekennzeichnet, dass** die Anordnung ein Hubmittel umfasst, welches ausgebildet und eingerichtet ist, die Wartungsplattform (20) in den zweiten Zustand zu heben und/oder zu senken, wobei die Wangen (21, 22) Holme (16) der Steigleiter (14) umgreifen.

11. Verfahren zur temporären Verwendung einer Wartungsplattform (20) nach einem der Ansprüche 1 bis 9, umfassend mindestens ein Geländer (27) und wenigstens ein Trittblech (26) sowie eine Luke (29), wobei das wenigstens eine Trittblech (26) an zwei Trägern (24, 25) lösbar gehaltert ist und die Träger (24, 25) jeweils an einer Wange (21, 22) beweglich und lösbar gehaltert sind, im Inneren eines Turms (1), insbesondere eines Turms (1) einer Windenergieanlage, umfassend eine Steigleiter (14) eines Turmes (1) einer Windenergieanlage, mit folgenden Schritten zur Montage:
- die Komponenten der Wartungsplattform (20) innerhalb des Turms (1) zur Montage in eine erste vorbestimmte Höhe transportieren,
- die Wangen (21, 22) an Holmen (16) der Steigleiter (14) positionieren,
- eine obere Justierstange (23) durch die erste Wange (21, 22) und durch eine Sprosse (42) der Steigleiter (14) und die zweite Wange (21, 22) schieben und sichern,
- eine untere Justierstange (23) durch die erste Wange (21, 22) und durch eine Sprosse (42) der Steigleiter (14) und die zweite Wange (21, 22) schieben und sichern,
- den ersten Träger (24) mit der ersten Wange (21) lösbar verbinden und sichern,
- den zweiten Träger (25) mit der zweiten Wange (22) lösbar verbinden und sichern,
- das Trittblech (26) und die Luke (29) mit den Trägern (24, 25) lösbar verbinden und
- das Geländer (27) montieren und sichern.

12. Verfahren nach Anspruch 11, **gekennzeichnet durch**
zusätzliche Schritte zum vertikalen Verschieben und/oder Umsetzen der Wartungsplattform (20) an der Steigleiter (14):
- Demontieren der unteren Justierstange (23),
- Montieren der unteren Justierstange (23) an obere Laschen (36) der Wangen (21, 22) und Sichern der Justierstange (23),
- Anschlagen eines Hebemittels an der Wartungsplattform (20),
- das Hebemittel auf Zug belasten und Wartungsplattform (20) entlasten,
- Demontieren der oberen Justierstange (23),
- Lagern und Sichern der oberen Justierstange (23) in einer Aufnahme,
- Verbringen der Wartungsplattform (20) an der Steigleiter (14) geführt in die zweite vorbestimmte Höhe,
- Entnehmen der oberen Justierstange (23) aus der Aufnahme,
- die obere Justierstange (23) durch die erste Wange (21, 22) und durch eine Sprosse (42) der Steigleiter (14) und die zweite Wange (21, 22) schieben und sichern,
- das Hebemittel entkoppeln,
- die untere Justierstange (23) aus den oberen Laschen (36) der Wangen (21, 22) lösen und entnehmen und
- die untere Justierstange (23) durch die erste Wange (21, 22) und durch eine Sprosse (42) der Steigleiter (14) und die zweite Wange (21, 22) schieben und sichern.

13. Verfahren nach Anspruch 11 oder 12, **gekennzeichnet durch** zusätzliche Schritte zum Demontieren der Wartungsplattform (20) von der Steigleiter (14):
- das Geländer (27) demontieren,
- die Luke (29) und das Trittblech (26) demontieren,
- die Träger (24, 25) demontieren,
- die Justierstangen (23) und die Wangen (21, 22) demontieren und
- die Bauteile der Wartungsplattform (20) abtransportieren.

## Claims

1. Maintenance platform (20) for preferably temporary use in the interior of a tower, in particular of a tower (1) of a wind turbine, wherein the maintenance platform (20) comprises at least one handrail (27) and at least one tread plate (26) and also a hatch (29), wherein the at least one tread plate (26) is retained in a releasable manner on two supports (24, 25), **characterized in that**
the supports (24, 25) are retained in a movable and releasable manner on a respective vertical sidepiece (21, 22), wherein the sidepieces (21, 22) are designed, at least in part, in the form of a U-shaped profile, wherein the open sides of the U-shaped profiles are directed towards one another,
and **in that**
the sidepieces (21, 22) can be connected and/or oriented parallel to one another by at least two adjustment rods (23).

2. Maintenance platform (20) according to Claim 1, **characterized in that**
each support (24, 25) has at least one mount for an attachment means of a wire cable (28), wherein the attachment means is designed in the form of a supporting loop, cable thimble or safety carabiner (31) .

3. Maintenance platform (20) according to one of Claims 1 to 2, **characterized in that**
each support (24, 25) has at least one tube bushing (37) for accommodating an upright tube of the handrail (27), wherein the or each tube bushing (37) has at least one bore for a securing means for securing the handrail (27).

4. Maintenance platform (20) according to one of Claims 1 to 3, **characterized in that**
each sidepiece (21, 22) has at least one mount (35) for an attachment means of a wire cable (28), wherein the attachment means is designed in the form of a supporting loop (38), cable thimble or safety carabiner (31).

5. Maintenance platform (20) according to one of Claims 1 to 4, **characterized in that**
each sidepiece (21, 22) has a first bore for accommodating, and/or through which to pass, a, or the first, adjustment rod (23) and a second bore for accommodating, and/or through which to pass, a, or the second, adjustment rod (23).

6. Maintenance platform (20) according to one of Claims 1 to 5, **characterized in that**
each sidepiece (21, 22) has at least one slider in the U-shaped profile.

7. Maintenance platform (20) according to one of Claims 1 to 6, **characterized in that**,
in the assembled state, each support (24, 25) and the respectively assigned sidepiece (21, 22) enclose an angle ranging from 87° to 93°.

8. Maintenance platform (20) according to Claim 7, **characterized in that**
the angle between each support (24, 25) and the respectively assigned sidepiece (21, 22) can be adjusted in the range from 87° to 93°.

9. Arrangement for the maintenance of internals in a tower (1) of a wind turbine, comprising a vertical ladder (14) of a tower (1) of a wind turbine and a maintenance platform (20) according to one of Claims 1 to 8, **characterized in that**,
in a first state, the vertical ladder (14) is positioned between the sidepieces (21, 22) and the sidepieces (21, 22) of the maintenance platform (20) are retained in a releasable manner on the vertical ladder (14) by means of the adjustment rods (23), wherein the adjustment rods (23) are guided in each case through a hollow rung (42) of the vertical ladder (14), and, in a second state, the sidepieces (21, 22) are mounted in a vertically displaceable manner on the vertical ladder (14), wherein the sidepieces (21, 22) are connected to one another outside the rungs (42) by the adjustment rods (23).

10. Arrangement according to Claim 9, **characterized in that**
the arrangement comprises a lifting means, which is designed and intended to raise and/or to lower the maintenance platform (20) into the second state, wherein the sidepieces (21, 22) engage around stringers (16) of the vertical ladder (14).

11. Method for temporary use of a maintenance platform (20) according to one of Claims 1 to 8, comprising at least one handrail (27) and at least one tread plate (26) and also a hatch (29), wherein the at least one tread plate (26) is retained in a releasable manner on two supports (24, 25), and the supports (24, 25) are mounted in a movable and releasable manner on a respective sidepiece (21, 22), in the interior of the tower (1), in particular of a tower (1) of a wind turbine, comprising a vertical ladder (14) of a tower (1) of a wind turbine, having the following steps for assembly purposes:
- transporting the components of the maintenance platform (20) within the tower (1), for assembly purposes, to a first predetermined height,
- positioning the sidepieces (21, 22) on stringers (16) of the vertical ladder (14),
- pushing an upper adjustment rod (23) through the first sidepiece (21, 22) and through a rung (42) of the vertical ladder (14) and the second sidepiece (21, 22), and securing the same,
- pushing a lower adjustment rod (23) through the first sidepiece (21, 22) and through a rung (42) of the vertical ladder (14) and the second sidepiece (21, 22), and securing the same,
- connecting the first support (24) to the first sidepiece (21) in a releasable manner, and securing the same,
- connecting the second support (25) to the second sidepiece (22) in a releasable manner, and securing the same,
- connecting the tread plate (26) and the hatch (29) to the supports (24, 25) in a releasable manner, and
- installing the handrail (27), and securing the same.

12. Method according to Claim 11, **characterized by** additional steps for vertically displacing and/or relocating the maintenance platform (20) on the vertical ladder (14):
- removing the lower adjustment rod (23),
- installing the lower adjustment rod (23) on upper link plates (36) of the sidepieces (21, 22), and securing the adjustment rod (23),
- attaching a lifting means to the maintenance platform (20),
- subjecting lifting means to tensile loading and relieving the maintenance platform (20) of loading,
- removing the upper adjustment rod (23),
- mounting, and securing, the upper adjustment rod (23) in a mount,
- shifting the maintenance platform (20), with guidance along the vertical ladder (14), to the second predetermined height,
- removing the upper adjustment rod (23) from the mount,
- pushing the upper adjustment rod (23) through the first sidepiece (21, 22) and through a rung (42) of the vertical ladder (14) and the second sidepiece (21, 22), and securing the same,
- disengaging the lifting means,
- releasing the lower adjustment rod (23) from the upper link plates (36) of the sidepieces (21, 22), and removing the same, and
- pushing the lower adjustment rod (23) through the sidepiece (21, 22) and through a rung (42) of the vertical ladder (14) and the second sidepiece (21, 22), and securing the same.

13. Method according to Claim 11 or 12, **characterized by**
additional steps for removing the maintenance platform (20) from the vertical ladder (14):
- removing the handrail (27),
- removing the hatch (29) and the tread plate (26),
- removing the supports (24, 25),
- removing the adjustment rods (23) and the sidepieces (21, 22), and
- transporting away the components of the maintenance platform (20).

## Revendications

1. Plate-forme de maintenance (20) destinée à être utilisée de préférence temporairement à l'intérieur d'une tour, notamment d'une tour (1) d'un aérogénérateur, la plate-forme de maintenance (20) comportant au moins un garde-corps (27) et au moins une tôle formant marchepied (26) ainsi qu'une lucarne (29), l'au moins une tôle formant marchepied (26) étant maintenue de manière amovible au niveau de deux éléments porteurs (24, 25), **caractérisée en ce que**
les éléments porteurs (24, 25) sont respectivement maintenus avec mobilité et de manière amovible au niveau d'une joue (21, 22) verticale, les joues (21, 22) étant réalisées au moins dans certaines portions sous la forme d'un profilé en U, les côtés ouverts des profilés en U se faisant mutuellement face, et **en ce que** les joues (21, 22) peuvent être orientées et/ou peuvent être reliées parallèlement l'une à l'autre par au moins deux tiges d'ajustement (23).

2. Plate-forme de maintenance (20) selon la revendication 1, **caractérisée en ce que** chaque élément porteur (24, 25) possède au moins un logement pour un moyen d'accrochage d'un câble métallique (28), le moyen d'accrochage étant réalisé sous la forme d'une dragonne, d'une cosse de câble ou d'un mousqueton de sécurité (31).

3. Plate-forme de maintenance (20) selon l'une des revendications 1 à 2, **caractérisée en ce que** chaque élément porteur (24, 25) possède au moins une douille tubulaire (37) destinée à accueillir un tube vertical du garde-corps (27), la ou chaque douille tubulaire (37) possédant au moins un perçage pour un moyen d'arrêt destiné à bloquer le garde-corps (27).

4. Plate-forme de maintenance (20) selon l'une des revendications 1 à 3, **caractérisée en ce que** chaque joue (21, 22) possède au moins un logement (35) pour un moyen d'accrochage d'un câble métallique (28), le moyen d'accrochage étant réalisé sous la forme d'une dragonne (38), d'une cosse de câble ou d'un mousqueton de sécurité (31) .

5. Plate-forme de maintenance (20) selon l'une des revendications 1 à 4, **caractérisée en ce que** chaque joue (21, 22) possède un premier perçage destiné à accueillir et/ou à faire passer une ou la première tige d'ajustement (23) et un deuxième perçage destiné à accueillir et/ou à faire passer une ou la deuxième tige d'ajustement (23).

6. Plate-forme de maintenance (20) selon l'une des revendications 1 à 5, **caractérisée en ce que** chaque joue (21, 22) possède au moins une pièce coulissante dans le profilé en U.

7. Plate-forme de maintenance (20) selon l'une des revendications 1 à 6, **caractérisée en ce que** chaque élément porteur (24, 25) et la joue (21, 22) respectivement associée, à l'état monté, forment un angle dans la plage de 87° à 93°.

8. Plate-forme de maintenance (20) selon la revendication 7, **caractérisée en ce que** l'angle entre chaque élément porteur (24, 25) et la joue (21, 22) respectivement associée est réglable dans la plage de 87° à 93°.

9. Arrangement pour la maintenance d'objets installés dans une tour (1) d'un aérogénérateur, comprenant une échelle d'accès (14) d'une tour (1) d'un aérogénérateur et une plate-forme de maintenance (20) selon l'une des revendications 1 à 8, **caractérisé en ce que** dans un premier état, l'échelle d'accès (14) est positionnée entre les joues (21, 22) et les joues (21, 22) de la plate-forme de maintenance (20) sont maintenues de manière amovible à l'échelle d'accès (14) au moyen des tiges d'ajustement (23), les tiges d'ajustement (23) étant respectivement guidées à travers un échelon creux (42) de l'échelle d'accès (14), et dans un deuxième état, les joues (21, 22) sont supportées de manière coulissante dans le sens vertical contre l'échelle d'accès (14), les joues (21, 22) étant reliées l'une à l'autre par les tiges d'ajustement (23) à l'extérieur des échelons (42).

10. Arrangement selon la revendication 9, **caractérisé en ce que** l'arrangement comporte un moyen de levage qui est configuré et conçu pour lever et/ou pour descendre la plate-forme de maintenance (20) dans le deuxième état, les joues (21, 22) enveloppant les montants (16) de l'échelle d'accès (14).

11. Procédé d'utilisation temporaire d'une plate-forme de maintenance (20) selon l'une des revendications 1 à 8, comprenant au moins un garde-corps (27) et au moins une tôle formant marchepied (26) ainsi qu'une lucarne (29), l'au moins une tôle formant marchepied (26) étant maintenue de manière amovible au niveau de deux éléments porteurs (24, 25) et les éléments porteurs (24, 25) étant respectivement maintenus avec mobilité et de manière amovible au niveau d'une joue (21, 22), à l'intérieur d'une tour (1), notamment d'une tour (1) d'un aérogénérateur, comportant une échelle d'accès (14) d'une tour (1) d'un aérogénérateur, comprenant les étapes suivantes pour le montage :
- transport des composants de la plate-forme de maintenance (20) à l'intérieur de la tour (1) en vue du montage à une première hauteur prédéterminée,
- positionnement des joues (21, 22) au niveau des montants (16) de l'échelle d'accès (14),
- glissement d'une tige d'ajustement (23) supérieure à travers la première joue (21, 22) et à travers un échelon (42) de l'échelle d'accès (14) et la deuxième joue (21, 22), puis blocage de celle-ci,
- glissement d'une tige d'ajustement (23) inférieure à travers la première joue (21, 22) et à travers un échelon (42) de l'échelle d'accès (14) et la deuxième joue (21, 22), puis blocage de celle-ci,
- liaison amovible du premier élément porteur (24) à la première joue (21) et blocage de celui-ci,
- liaison amovible du deuxième élément porteur (25) à la deuxième joue (22) et blocage de celui-ci,
- liaison amovible de la tôle formant marchepied (26) et de la lucarne (29) aux éléments porteurs (24, 25) et
- montage et blocage du garde-corps (27).

12. Procédé selon la revendication 11, **caractérisé par** les étapes supplémentaires pour le décalage et/ou le changement de place vertical de la plate-forme de maintenance (20) au niveau de l'échelle d'accès (14) :
- démontage de la tige d'ajustement (23) inférieure,
- montage de la tige d'ajustement (23) inférieure au niveau des éclisses (36) supérieures des joues (21, 22) et blocage de la tige d'ajustement (23),
- accrochage d'un moyen de levage à la plate-forme de maintenance (20),
- application d'une contrainte de traction au moyen de levage et soulagement de la plate-forme de maintenance (20),
- démontage de la tige d'ajustement (23) supérieure,
- stockage et blocage de la tige d'ajustement (23) supérieure dans un logement,
- amenée de la plate-forme de maintenance (20), guidée contre l'échelle d'accès (14), à la deuxième hauteur prédéterminée,
- retrait de la tige d'ajustement (23) supérieure du logement,
- glissement de la tige d'ajustement (23) supérieure à travers la première joue (21, 22) et à travers un échelon (42) de l'échelle d'accès (14) et la deuxième joue (21, 22), puis blocage de celle-ci,
- désaccouplement du moyen de levage,
- détachement de la tige d'ajustement (23) inférieure des éclisses (36) supérieures des joues (21, 22) et retrait de celle-ci et
- glissement de la tige d'ajustement (23) inférieure à travers la première joue (21, 22) et à travers un échelon (42) de l'échelle d'accès (14) et la deuxième joue (21, 22), puis blocage de celle-ci.

13. Procédé selon la revendication 11 ou 12, **caractérisé par** les étapes supplémentaires pour démonter la plate-forme de maintenance (20) de l'échelle d'accès (14) :
- démontage du garde-corps (27),
- démontage de la lucarne (29) et de la tôle formant marchepied (26),
- démontage des éléments porteurs (24, 25),
- démontage des tiges d'ajustement (23) et des joues (21, 22) et
- transport d'enlèvement des éléments structuraux de la plate-forme de maintenance (20).
